# EUROPÄISCHE PATENTANMELDUNG

(11) **EP 1 624 329 A2**
(43) Veröffentlichungstag der Anmeldung: **08.02.2006**
(21) Anmeldenummer: 04023513.7
(22) Anmeldetag: 01.10.2004
(51) Int. Cl.: G02B 21/00, G02B 26/08

(54) **Korrektur-Vorrichtung für eine optische Anordnung und konfokales Mikroskop mit einer solchen Vorrichtung**

(30) Priorität: 16.07.2004 DE 102004034960
(71) Anmelder: Carl-Zeiss Jena GmbH, 07745 Jena (DE)
(72) Erfinder: Wald, Matthias, 07751 Kunitz (DE); Steinert, Jörg, 07743 Jena (DE); Pergande, Saskia, 07743 Jena (DE)

(57) **Zusammenfassung**

Eine Korrektur-Vorrichtung für eine einen Strahlengang aufweisende, abbildende optische Anordnung (1), insbesondere für ein Mikroskop, weist mindestens eine planparallele transparente Platte (9) auf, die in einer Halterung im Abbildungsstrahlengang gehalten ist und durch diese in einer Kipp- und/oder Schwenkbewegung um mindestens eine Achse antreibbar ist, um durch Veränderung der Kipplage der Platte (9) einen bestimmten Parallelversatz der Strahlen im Abbildungsstrahlengang einzustellen. Ein konfokales Mikroskop mit einer solchen Korrekturvorrichtung weist eine konfokale Blende (4) auf, die ein Probenspot (10) abbildet, wobei die planparallele Platte (9) im Strahlengang der Detektoreinheit (2) vorgeordnet ist, um die Abbildung der Aperturblende auf die Detektoreinheit zu zentrieren.

## Beschreibung

Die Erfindung bezieht sich auf eine Korrektur-Vorrichtung für eine ein Strahlengang aufweisende optische Anordnung, z.B. für ein Mikroskop, und im Besonderen auf ein konfokales Mikroskop mit einer solchen Korrektur-Vorrichtung.

Optische Anordnungen, wie beispielsweise Mikroskope, konfokale Mikroskope oder Laserscanningmikroskope, weisen regelmäßig verstellbare Elemente auf, um unterschiedliche Betriebszustände einzustellen. So ist es beispielsweise bekannt, Filter oder Farbteiler auszutauschen, um mit unterschiedlichen Beleuchtungswellenlängen arbeiten zu können oder Fluoreszenzstrahlung in unterschiedlichen Wellenlängenbereichen auszuwerten. Die Verstell-oder Wechselmechaniken müssen regelmäßig mechanisch sehr aufwendig und hoch präzise ausgeführt werden, um unerwünschte Störungen des Strahlengangs bei Elementwechsel oder -verstellung möglichst gering zu halten.

Diese Problematik stellt sich insbesondere bei konfokalen Mikroskopen oder Laserscanningmikroskopen, bei denen eine konfokale Blende mit einer Detektoreinheit verwendet wird, die ihrerseits eine Detektorblende beinhaltet oder als solche wirkt. Da auch bei sehr großem mechanischen Aufwand für die wechsel- oder verstellbaren Elemente Beeinflussungen des Strahlengangs beispielsweise durch Kipp- oder Keilfehler am optischen Element nie ganz ausgeschlossen werden können, sind im Stand der Technik zum Teil aufwendige Korrekturmechanismen vorgesehen, um den Strahlengang der Abbildung mit solchen Pinhole-Objektiven zu verändern.

So ist beispielsweise in der DE 101 47 481 A1 eine verstellbare konfokale Blende für ein Laserscanningmikroskop beschrieben, die eine Verschiebung der Blendenöffnung ermöglicht, um bei durch Einstellung oder Wechsel optischer Elemente bewirkter Kipp- oder Keilfehlern die konfokale Blende geeignet verschieben zu können, damit immer eine optimale Abbildung im konfokalen Mikroskop erfolgt. Einen ähnlichen Ansatz, der ebenfalls bei der optischen Abbildung maßgebliche Elemente verstellt, schildert die DE 101 07 210 C1. Dort wird in einem konfokalen Mikroskop eine bei der Abbildung mitwirkende Fokussierlinse quer zur optischen Achse des Strahlengangs verschoben. Auch damit kann eine Anpassung der Abbildung im konfokalen Mikroskop bewirkt werden.

Den Ansätzen des Standes der Technik ist also gemein, die optische Abbildung im konfokalen Mikroskop, d. h. in der optisch abbildenden Anordnung, zu verändern - entweder durch Veränderung der Lage einer konfokalen Blende zum abzubildenden Objekt oder durch Verstellung anderer abbildender Elemente der Abbildungsoptik. Neben einem relativ großen mechanisch-optischen Aufwand, der für diese Ansätze nötig ist, besteht bei diesem im Stand der Technik verfolgten Prinzip die grundsätzliche Problematik, daß die Abbildungsverhältnisse mitunter nicht mehr vergleichbar sind. Eine umständliche Neukalibrierung von Abbildungsmaßstäben kann nötig werden.

Der Erfindung liegt deshalb die Aufgabe zugrunde, für eine optisch abbildende Anordnung eine Korrektur-Vorrichtung anzugeben, mit der eine Korrektur möglich ist, ohne die optische Abbildung selbst zu verstellen, insbesondere ohne abbildende Elemente verstellen zu müssen.

Diese Aufgabe wird erfindungsgemäß mit einer Korrektur-Vorrichtung für eine einen Strahlengang aufweisende, abbildende optische Anordnung gelöst, wobei die Vorrichtung mindestens eine planparallel transparente Platte aufweist, die in einer Halterung im Strahlengang gehalten ist und mittels der Halterung in einer Kipp- und/oder Schwenkbewegung um mindestens eine Achse antreibbar ist, um durch Veränderung der Kipplage der Platte einen bestimmten Parallelversatz des Strahlengangs einzustellen.

Die Erfindung sieht insbesondere in einer Weiterbildung ein konfokales Mikroskop vor, wobei das Mikroskop einen ausgewählten Probenbereich auf eine konfokale Blende, der eine Detektoreinheit nachgeordnet ist, abbildet und wobei die Platte im Strahlengang der Detektoreinheit vorgeordnet ist, um die Abbildung zu zentrieren.

Die erfindungsgemäße Korrektur-Vorrichtung hat den Vorteil, daß eine einfache Kompensation oder Korrektur von in der Abbildung der optischen Anordnung entstehenden Fehlern möglich ist, insbesondere können einfach Umgebungs- oder Systemtemperatur, Stellung von wechselbaren oder beweglichen Elementen in der Anordnung, Farbfehler aufgrund Wellenlänge oder Wellängebereichen der genutzten Strahlung korrigiert werden. Je nach Anforderung kann dabei eine einachsige Kipp- bzw. Schwenkbewegung genügen. Möchte man einen zweiachsigen Parallelversatz vorsehen, kann entweder eine zweiachsig kipp- bzw. schwenkbare Platte verwendet werden, oder man kann zwei unterschiedlich einachsig kipp-oder schwenkbare Platten vorsehen. Wesentlich für die Erfindung ist es, daß die planparallele Platte mit der Halterung auf definierte und bekannte Weise im Strahlengang verkippt werden kann. Für eine zweiachsige Verstellung ist jede Kombination von Kipp- und Schwenkbewegung tauglich. Eine Kombination aus einer Kippbewegung und einer Schwenkbewegung ist dabei mechanisch relativ einfach zu realisieren und bringt trotz des bei der Schwenkbewegung auftretenden Verschiebens der planparallelen Platte entlang der optischen Achse überraschenderweise keinen Nachteil.

Die von der Vorrichtung bewirkte Korrektur kann ein Benutzer manuell einleiten, z.B. bei einer Justage im Werk. Besonders bevorzugt ist jedoch eine Weiterbildung mit einer Stelleinrichtung, die mindestens einen Betriebsparameter der optischen Anordnung erfaßt und die Kipplage abhängig vom Wert des Betriebsparameters einstellt. Die Kipplage kann beispielsweise in Kalibriertabellen abgelegt werden. Auch ist es möglich über aktive Regelkreise permanent, regelmäßig oder auf Anforderung hin eine Korrektur durch Einstellen der Kipplage zu optimieren. Für eine solche Ausgestaltung ist es bevorzugt, einen Regelkreis vorzusehen, der die Kipplage der Platte als Stellgröße verwendet, um die geschilderten Auswirkungen auf die abbildende optische Anordnung auszugleichen. So können auf einfache Weise in der optischen Anordnung eventuell vorhandene Temperatur- oder Langzeitdriftfehler ausgeglichen werden.

Da der Parallelversatz durch eine planparallele Platte bekanntermaßen von der Brechzahl des transparenten Plattenmaterials abhängt, können bei polychromatischer Strahlung im Strahlengang der optischen Anordnung Farbquerfehler durch einen wellenlängenabhängigen Parallelversatz aufgrund einer Dispersion des Plattenmaterials entstehen. Durch Aufbau der planparallelen Platte aus einer oder mehrerer Teilplatten kann man solche, durch die planparallele Platte bedingten Farbquerfehler kompensieren.

Die erfindungsgemäße Korrektur-Vorrichtung kann aber auch zur Verwendung betriebszustandabhängig variierender Farbquerfehler der optischen Abbildung selbst eingesetzt werden. Ist beispielsweise eine optische Anordnung in der Lage, mit unterschiedlichen Wellenlängen zu arbeiten, so kann ein wellenlängenabhängiger und damit betriebszustandsabhängiger Farbquerfehler auftreten. Die erfindungsgemäße Korrektur-Vorrichtung kann dann die planparallele Platte je nach gerade in der optischen Anordnung benutzten Wellenlängenbereich und dadurch verursachten Farbquerfehler in eine andere Kipplage bringen, so daß im Endeffekt trotz Betrieb mit unterschiedlichen Wellenlängenbereichen dennoch eine unveränderte optische Abbildung in der Anordnung erfolgt. Auch für diese Korrektur kann natürlich wieder, wie bereits erwähnt, eine geeignete Stelleinrichtung, die auch einen Regelkreis aufweisen kann, verwendet werden.

Die Anforderungen an die Genauigkeit oder Feinfühligkeit, mit der der Antrieb über die Halterung erfolgt, ist, wie der zugängige Parallelversatzbereich auch, über die Dicke der planparallelen Platte einfach vorgebbar.

Die erfindungsgemäße Korrektur-Vorrichtung mindert, wie bereits erwähnt, die Anforderungen an verstellbare optische Elemente in der abbildenden optischen Anordnung. Dieser Vorteil ist besonders bedeutsam im Falle der bereits erwähnten Weiterbildung als konfokales Mikroskop.

In einem konfokalen Mikroskop wird üblicherweise ein ausgewählter Probenbereich (Spot) beleuchtet und auf eine konfokale Blende in Form eines sogenannten Pinhole-Objektivs abgebildet, dem ein Detektor folgt. Die durch diese Blende transmittierte Strahlung gelangt mit oder ohne Zwischenabbildung auf einen Detektor; auch kann der Detektor selbst als konfokale Blende dienen. Die Beleuchtung kann linien- oder punktförmig erfolgen.

Es muß dafür Sorge getragen werden, den Probenbereich vollständig auf die im Pinhole-Objektiv vorgesehene konfokale Blende abzubilden. Diese wird vor allem dadurch erschwert, daß ein konfokales Mikroskop regelmäßig austauschbare Strahlteiler aufweist, mit denen eine Anpassung des Mikroskops auf verschiedene Applikationen, d.h. ein Wechsel der eingestrahlten oder ausgelesenen Wellenlängen erfolgt. Die dazu einzeln einschaltbaren optischen Elemente bringen an den Wechselstellen Kipp- oder Keilfehler mit sich, die nur mit großem Aufwand so reduziert werden können, daß sie sich nicht störend auf die Abbildung im Mikroskop auswirken. Gleiches gilt für Temperatur- oder Langzeitdriftänderungen. Die erfindungsgemäße Korrektur-Vorrichtung erlaubt nun die Realisierung eines konfokalen Mikroskops, bei dem durch veränderbare optische Elemente bedingte Fehler ohne Eingriff auf die optische Abbildung einfach korrigiert werden können. Darüber hinaus kann die Korrekturvorrichtung auch zwischen konfokaler Blende und Detektor eingesetzt werden und so den Strahlengang (Abbildung) zwischen Blende und Detektor geeignet korrigieren.

Obschon bei konfokalen Mikroskopen, die zur Detektion ein Pinhole-Objektiv vor einem nicht ortsauflösenden Detektor verwenden, die Korrektur bereits eine deutliche Erleichterung an die mechanischen Anforderungen hinsichtlich der einschaltbaren optischen Elemente mit sich bringt, ist die Aufwandsersparnis durch die erfindungsgemäße Korrektur-Vorrichtung in einem konfokalen Mikroskop der genannten Art besonders merklich, wenn das konfokale Mikroskop einen ortsauflösenden Detektor umfaßt. Dies ist beispielsweise bei einem zeilenscannenden Laserscanningmikroskop der Fall, das eine Schlitzblende als Pinhole-Blende vor einer Detektorzeile verwendet. Es ist dann über eine entsprechende Einstellung der Kipplage der planparallelen transparenten Platte möglich, sowohl eine Kompensation von Abweichungen senkrecht zur Schlitzblende als auch eine Kompensation von Abweichungen parallel zur Schlitzblende auszugleichen.

Im ersteren Fall wird sichergestellt, daß das von der Probe kommende Licht exakt auf die Schlitzblende trifft und nicht oberhalb oder unterhalb der Schlitzblende dezentriert ist. Im zweiten Fall wird sichergestellt, daß das von der Probe kommende Licht den Zeilendetektor korrekt trifft und zwischen Bildern von zwei Detektionskanälen im System, die beispielsweise jeder einen eigenen Zeilendetektor aufweisen, kein Pixelversatz besteht. Somit kann das erfindungsgemäße konfokale Mikroskop eine subpixelgenaue Bilddeckung bei Mehrkanalausbildung erreichen.

Die Problematik mit senkrecht zur Zeilenrichtung abweichender Schlitzblende ist im konfokalen Mikroskop weiter dahingehend vorteilhaft gelöst, daß nunmehr eine schmale Detektorzeile verwendet werden kann, ohne daß eine Bewegung von Schlitzblende und Detektor nötig wird. Es ist dann vermieden, daß bei einer Dejustage (bedingt durch Kipp- und Keilfehler wechselbarer Elemente) bei einem zur Auflösungserhöhung erfolgten Abblenden der Schlitzblende unnötig Lichtfluß verloren geht und damit das Signal-/Rauschverhältnis sinkt.

Da die Kipp- oder Keilfehler einzeln einschaltbarer optischer Elemente in der Regel reproduzierbar sind, kann die Kipplage der transparenten planparallelen Platte auf einfache Weise gewählt werden. Bei Wechsel eines einschaltbaren optischen Elementes ist lediglich ein bestimmter Antrieb der planparallelen transparenten Platte erforderlich, um die für die anzustrebende Konfiguration des Mikroskops neu erforderliche Kipplage einzustellen. Es ist deshalb eine Weiterbildung des erfindungsgemäßen Mikroskops bevorzugt, bei der im Strahlengang wechsel- oder verstellbare Elemente vorgesehen sind und die Stelleinreichung eine Konfiguration der wechsel- oder verstellbaren Elemente als Betriebsparameter erfaßt und die Kipplage abhängig vom Wert des Betriebsparameters einstellt.

Ein Beispiel für einen solchen Parameter, bei dem nicht nur die Dejustierung der optischen Abbildung bezogen auf die Pinhole-Blende ausgeglichen wird, sondern auch ein Farbquerfehler, sieht in vorteilhafter Weise vor, im Strahlengang des Mikroskops Strahlung unterschiedlicher Wellenlänge zu führen, wobei die Stelleinrichtung die Wellenlänge im Strahlengang als Betriebsparameter erfaßt und die Kipplage entsprechend einstellt. Es ist dann für ein konfokales, spektral mehrkanaliges Mikroskop für jeden Detektionskanal eine oder mehrere planparallele Platten dem Detektor vorgeordnet und die Kipplage der planparallelen Platte wird von der Stelleinrichtung auch abhängig von der Wellenlänge bzw. dem Wellenlängenbereich der auf dem Detektor im aktuellen Kanal gerichteten Platte eingestellt.

Eine besonders komfortable Benutzung erhält man für ein konfokales Mikroskop, wenn ein Regelkreis vorgesehen ist, der die Strahlungsintensität an der Detektoreinheit maximiert, und/oder den Bildversatz minimiert indem die Kipplage der planparallelen Platte als Stellgröße eingesetzt wird. Somit können Langzeiteffekten oder Temperaturveränderungen, die Dejustagen nach sich ziehen, jederzeit ohne Einsatz eines Servicetechnikers auskorrigiert werden.

Es ist deshalb eine Ausführungsform bevorzugt, bei der die Aperturblende als konfokale Schlitzblende und die Detektoreinheit als Detektorzeile ausgebildet sind und wobei die Kipplage der planparallelen Platte zweiachsig so eingestellt ist, daß das Bild der Schlitzblende auf der Detektorzeile zweiachsig zentriert ist.

Die Erfindung wird nachfolgend unter Bezugnahme auf die Zeichnung beispielshalber noch näher erläutert. In den Zeichnungen zeigen:
- Fig. 1: eine schematische Darstellung einer Detektoranordnung eines Laserscanningmikroskops,
- Fig. 2: eine schematische Darstellung zur Verdeutlichung des Korrekturbedarfs bei der Detektoranordnung der Figur 1,
- Fig. 3: eine schematische Darstellung einer planparallelen Platte in der Detektoranordnung der Figur 1 und
- Fig. 4: eine perspektivische Darstellung der planparallelen Platte der Figur 1 mit motorischem Antrieb.

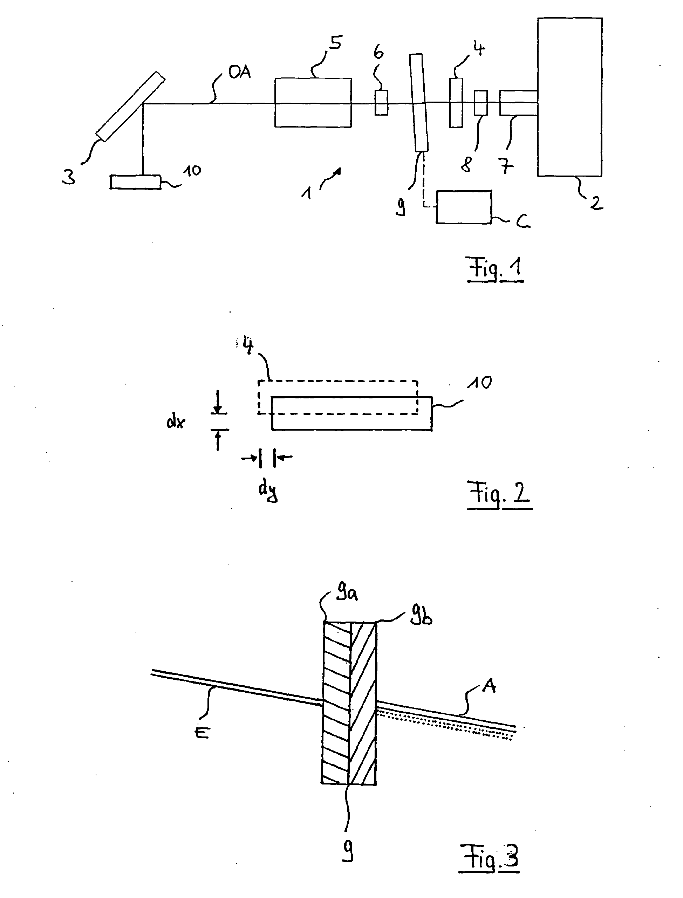

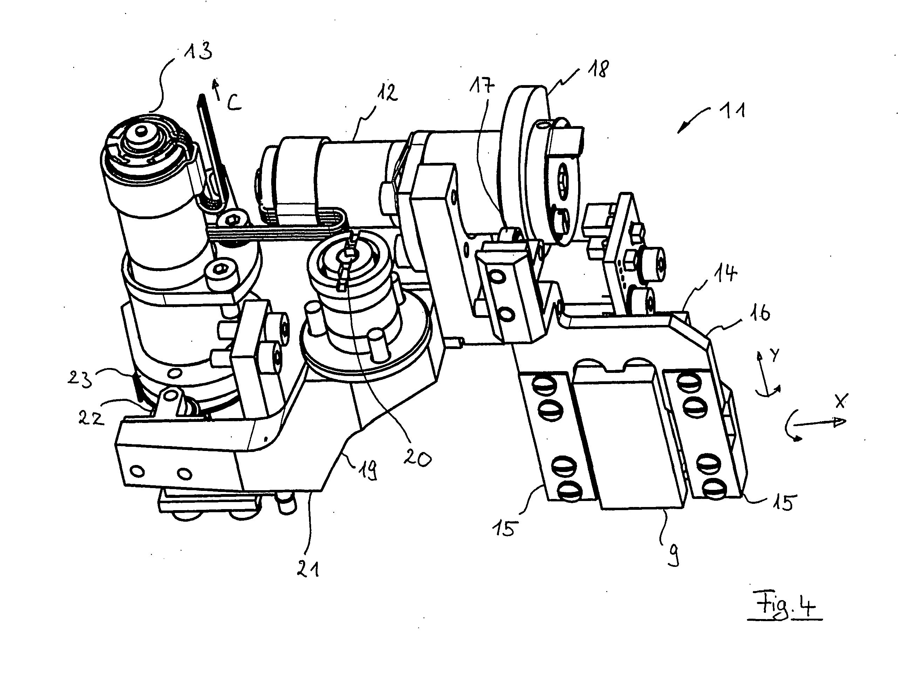

Figur 1 zeigt schematisch eine Detektoranordnung 1 für ein Laserscanningmikroskop. Die Detektoranordnung 1 weist eine CCD-Zeile 2 auf, die über einen Farbteiler 3 in den Strahlengang des (nicht weiter dargestellten) Laserscanningmikroskops eingebunden ist. Der Farbteiler 3 ist wechselbar, um mit der Detektoranordnung 1 Strahlung unterschiedlicher Wellenlängebereiche erfassen zu können. Die Anpaßbarkeit durch den wechselbaren Farbteiler 3 kann dabei sowohl hinsichtlich im Laserscanningmikroskop verwendeter Anregungsstrahlung als auch hinsichtlich zu detektierender (Fluoreszenz-)Strahlung gegeben sein.

Die CCD-Zeile 2 erhält über den Farbteiler 3 Strahlung, die durch eine als Aperturblende wirkende Schlitzblende 4 auf die CCD-Zeile 2 fällt.

Die Schlitzblende 4 bildet zusammen mit einer vorgeordneten Rundoptik 5 sowie einer ebenfalls vorgeordneten ersten Zylinderlinse 6 sowie einer nachgeordneten zweiten Zylinderlinse 7 ein Pinhole-Objektiv der Detektoranordnung 1, wobei das Pinhole hier durch die Schlitzblende 4 realisiert ist. Es handelt sich also beim Laserscanningmikroskop um ein zeilenscannendes Mikroskop, bei dem eine konfokale oder zumindest teil-konfokale Abbildung eines rechteckigen oder linienförmigen Bereiches (Zeile) von einer Probe mittels des Pinhole-Objektivs bzw. der Detektoranordnung 1 auf die CCD-Zeile 2 erfolgt.

Der zur Fluoreszenzanregung beleuchtete Probenfleck, der konfokal abgebildet wird, ist in Figur 1 schematisch als Probenspot 10 dargestellt. Um eine unerwünschte Detektion von im System reflektierter Anregungsstrahlung an der CCD-Zeile 2 zu vermeiden, ist der zweiten Zylinderlinse 7 noch ein Blockfilter 8 vorgeschaltet, der über geeignete spektrale Eigenschaften verfügt, um lediglich gewünschte Fluoreszenzstrahlung zu CCD-Zeile 2 gelangen zu lassen.

Ein Wechsel des Farbteilers 3 oder des Blockfilters 8 bringt unvermeidlich einen gewissen Kipp-oder Keilfehler bei Einschwenken mit sich. Der Farbteiler kann einen Fehler zwischen Probenzeile 10 und Schlitz 4, das Blockfilter 8 einen Fehler zwischen Schlitzblende 4 und CCD-Zeile 2 nach sich ziehen. Um zu verhindern, daß dann eine Neujustierung der Lage der Schlitzblende 4 bzw. der CCD-Zeile 2 erforderlich ist, ist zwischen der Rundoptik 5 und der Schlitzblende 4, d.h. im Abbildungsstrahlengang zwischen Probenspot 10 und CCD-Zeile 2 eine planparallele Platte 9 angeordnet, die unter Steuerung eines Controllers C in verschiedene Kippstellungen gebracht werden kann. Die planparallele Platte 9 ist dazu in einer geeigneten (in Figur 1 nicht dargestellten) Halterung angebracht, die später noch anhand der Figur 4 erläutert werden wird.

Die planparallele Platte 9 bewirkt einen Parallelversatz, der in Figur 1 als leichter Versatz der optischen Achse OA eingezeichnet ist. Dieser Parallelversatz ist schematisch auch in Figur 3 zu sehen, die eine (später noch zu erläuternde) Ausführungsform einer zweitteiligen planparallelen Platte 9 betrifft. Das auf die Platte 9 schräg zur Plattenoberfläche einfallende Strahlenbündel E tritt als versetztes Strahlenbündel A aus. Ohne planparallele Platte 9 wäre der in Figur 3 gestrichelt eingezeichnete ausfallende Strahl gegeben.

Eine Veränderung der Kippstellung der planparallelen Platte 9 ermöglicht es, die Lage der Probenzeile gegenüber der Schlitzblende 4 (sowie bei Einsatz der Platte 9 nach der Schlitzblende alternativ auch die Lage der Schlitzblende 9 zur ebenfalls als Blende wirkenden CCD-Zeile 2) so zu justieren, daß für gegebene Verhältnisse im Strahlengang, die sich durch Wechsel des Farbteilers 3 ändern mögen, immer eine optimale, d.h. zweiachsig zentrierte Lage gegeben ist. Dies ist in Figur 2 veranschaulicht, die in Draufsicht die Projektion der Schlitzblende 4 auf die Probenzeile 10 zeigt. Wie zu sehen ist, stellt sich aufgrund eines Kipp-oder Keilfehlers, der beispielsweise durch den Farbteiler 3 oder den Blockfilter 8 bedingt sein kann, sowohl in x-Richtung ein Versatz dx als auch in y-Richtung ein Versatz dy zwischen Schlitzblende 4 und Probenzeile 10 ein.

Der Versatz dx hat zur Folge, daß das Signal-/Rauschverhältnis unnötig verschlechtert ist. Möchte man durch Abblenden der Schlitzblende 4, d.h. durch Verringern ihrer Ausdehnung in x-Richtung die Tiefenauflösung im konfokalen Mikroskop verbessern, kann es geschehen, daß bei einem Versatz dx, der größer als die halbe Höhe der Probenzeile 10 ist, gar keine Strahlung mehr auf die CCD-Zeile gelangt. Der Versatz dx hat dann zur Folge, daß die mit dem Laserscanningmikroskop erreichbare Tiefenauflösung geringer ausfällt, als mit dem Gerät eigentlich erreichbar wäre. Analoges gilt für die alternative oder kumulative Ausführungsvariante zur Justierung von Schlitzblende 4 und CCD-Zeile 2.

Die durch Einstellung der Kipplage der planparallelen Platte 9 erreichte Justierung des Probenspotbildes 10 zur Schlitzblende 4 bewirkt, daß in x-Richtung gesehen keine Flächenbereiche der CCD-Zeile 2 unnötig unbestrahlt bleiben.

Der Versatz dy bewirkt dagegen, daß die in y durch die CCD-Zeile 2 erfaßte Ortsinformation nicht den tatsächlichen Emissions- oder Reflexionsverhältnissen am Probenspot 10 entspricht. Artefakte oder ein Versatz im Bild können die Folge sein. Die Einstellung der Kipplage der Platte 9 ermöglicht es, den Versatz dy zu minimieren, vorzugsweise sogar auf Null zu bringen, so daß die Schlitzblende 4 mittig auf der CCD-Zeile 2 liegt und alle Pixel der CCD-Zeile 2 korrekt ausgeleuchtet werden. Dies ist insbesondere dann wichtig, wenn das Laserscanningmikroskop mehrere Detektoranordnungen 1 aufweist, die über unterschiedliche Farbteiler 3 verschiedene Farbkanäle auslesen. Da aufgrund der individuellen Justierungen der Detektoranordnungen 1 mit ihren Farbteilern 3 ansonsten unterschiedliche Versätze dy vorliegen würden, wäre bei einem solchen Mehrkanallaserscanningmikroskop ein Fehler bei der Zuordnung der einzelnen Farbkanäle in einem zusammengesetzten Bild die Folge.

Je nach Wellenlänge oder Wellenlängenbereich, die bzw. der in der Detektoranordnung 1 ausgewertet wird, kann das Pinhole-Objektiv der Detektoranordnung 1 einen unterschiedlichen Farbquerfehler aufweisen. Gleiches gilt für der Detektoranordnung 1 vorgeschaltete Elemente, beispielsweise den Farbteiler 3 oder andere auf der optischen Achse OA liegende Optiken. Durch Einstellung der Kipplage der Platte 9 kann dieser Farbquerfehler gezielt kompensiert werden. Der Controller C steuert dazu die Platte 9 in eine Kipplage, wobei jede im Wellenlängebereich bzw. jeder Wellenlänge, für die die Detektoranordnung 1 eingesetzt werden kann, eine eigene Kipplage zugeordnet ist.

Wird in der Detektoranordnung 1 relativ breitbandig Strahlung geführt, kann die planparallele Platte selbst einen Farbquerfehler bewirken, wenn die Dispersion des transparenten Materials der planparallelen Platte 9 so ist, daß ein unterschiedlicher wellenlängenabhängiger Versatz des ausfallenden Strahlbündels A gegenüber dem einfallenden Strahlenbündel E gegeben ist. Zur Kompensation ist die in Figur 3 dargestellte Bauweise der planparallelen Platte 9 in einer Ausführungsform vorgesehen, die aus zwei Teilplatten 9a, 9b besteht. Die Materialien dieser Teilplatten 9a, 9b sind unterschiedlich und so gewählt, daß sich im Wellenlängenbereich, für den die Detektoranordnung 1 ausgelegt ist, die dispersiv bedingten Farbquerfehler möglichst aufheben. Beispielsweise bewirkt die Teilplatte 9a für kürzere Wellenlängen einen stärkeren Versatz als die Teilplatte 9b; umgekehrtes gilt für längere Wellenlängen. Somit ist eine Kompensation des Farbquerfehlers der planparallelen Platte 9 erreicht. Zur Erzeugung eines farbunabhängigen oder gezielt farbabhängigen Parallelversatzes können auch zwei getrennt kippbare Platten mit gegenläufiger Ablenkung und aus Materialien mit unterschiedlicher Dispersion verwendet werden.

Der Controller C stellt die Kipplage der Platte 9 auf Vorgabe eines Benutzers hin, nach Auswertung der aktuellen Konfiguration (insbesondere auch Umgebungs- oder Gerätetemperatur oder anderer externer Einflußgrößen) des Laserscanningmikroskops oder in kontinuierlich oder intermittierend ablaufenden Regelvorgängen ein. Bei einer Regelung wird die Kipplage der Platte 9 als Stellgröße verwendet. Als geregelte Größe kann in einem Kalibrierschritt die Strahlungsintensität oder der Bildversatz auf der CCD-Zeile 2 ausgewertet werden.

Der vom Controller 9 gesteuerte Antrieb 11 ist in Figur 4 perspektivisch dargestellt. Wie zu sehen ist, wird die planparallele Platte 9 mittels zweier Schrittmotoren 12, 13 um die x- bzw. y-Achse verstellt. Die Verstellung der x-Achse ist eine Kippbewegung mit einer Drehachse in der Mitte der Platte 9. Die Drehung um die y-Achse ist eine Schwenkbewegung um eine außerhalb der Platte gelegene Achse.

Zur Kippung um die x-Achse ist eine Halteplatte 14 vorgesehen, an der ein Paar Blattfedern 5 angeschraubt ist, die einen Rahmen 16 befestigen, in welchem die planparallele Platte 9 gefaßt ist. Die Blattfedern 15 legen die Kippachse fest. Sie drücken eine am Rahmen 16 befestigte Rolle 17 auf eine Kurvenscheibe 18, die vom Schrittmotor 12 angetrieben ist, welcher ebenfalls auf der Halteplatte 14 sitzt. Je nach Stellung der Kurvenscheibe 18 wird somit die Rolle 17 und damit der Rahmen 16 unterschiedlich ausgelenkt, wodurch die Kippung der Platte 9 um die x-Achse erreicht ist.

Die Halteplatte 14 ist ihrerseits ein Arm eines Hebels 19, der um eine Schwenkachse 20 drehbar ist. Die Schwenkachse 20 stellt die Achse für die Bewegung der Platte 9 um die y-Ebene dar. Der andere Arm 21 des Hebels 19 trägt an seinem Ende eine Rolle 22, die an einer Kurvenscheibe 23 anliegt, welche vom Schrittmotor 13 angetrieben wird. Ähnlich wie die Blattfedern 15 die Rolle 17 auf die Kurvenscheibe 18 drücken, ist an der Schwenkachse 20 ein Federelement vorgesehen, das die Rolle 22 auf die Kurvenscheibe 23 preßt.

Durch Ansteuerung der Schrittmotoren 12, 13 kann der Controller C, der über nicht weiter bezeichnete Leitungen mit den Schrittmotoren verbunden ist, die Kipp- bzw. Schwenklage der planparallelen Platte 9 im Strahlengang der Detektoranordnung 1 motorisch einstellen. Durch die inkrementelle Ansteuerung der Schrittmotoren 12, 13 ist in Kombination mit einer zum Betriebsbeginn angefahrenen Referenzposition die aktuelle Stellung der Platte 9 zu jedem Betriebszeitpunkt dem Controller C bekannt, so daß die Stellung der Platte 9 in einem Regelkreis als Stellgröße verwendet werden kann bzw. gemäß abgespeicherten Vorgaben eingestellt werden kann.

## Patentansprüche

1. Korrektur-Vorrichtung für eine einen Strahlengang aufweisende, abbildende optische Anordnung (1), insbesondere für ein Mikroskop, mit mindestens einer planparallelen transparenten Platte (9), die in einer Halterung (11) im Abbildungs-Strahlengang gehalten ist und durch diese in einer Kipp- und/oder Schwenkbewegung um mindestens eine Achse antreibbar ist, um durch Veränderung der Kipplage der Platte (9) einen bestimmten Parallelversatz (dx, dy) der Strahlen im Strahlengang einzustellen.

2. Vorrichtung nach Anspruch 1, mit mindestens einer zweiachsig kipp- und/oder schwenkbaren Platte (9) oder mindestens zwei unterschiedlich einachsig kipp- oder schwenkbaren Platten.

3. Vorrichtung nach einem der obigen Ansprüche mit einer Stelleinrichtung (C), die mindestens einen Betriebsparameter der optischen Anordnung (1) erfaßt und die Kipplage abhängig vom Wert des Betriebsparameters einstellt.

4. Vorrichtung nach einem der obigen Ansprüche, mit einem Regelkreis (C), der die Kipplage der Platte (9) als Stellgröße verwendet.

5. Vorrichtung nach einem der obigen Ansprüche mit zwei unabhängig antreibbaren Platten (9) aus Materialien unterschiedlicher Dispersion, um einen farbunabhängigen oder gezielt farbabhängigen Parallelversatz einzustellen.

6. Vorrichtung nach einem der obigen Ansprüche, wobei mindestens eine Platte (9) aus zwei Teilplatten (9a, 9b) mit Materialen unterschiedlicher Dispersion aufgebaut ist, um Farbquerfehler im Strahlengang zu kompensieren.

7. Konfokales Mikroskop mit einer Korrektur-Vorrichtung nach einem der obigen Ansprüche, das einen ausgewählten Probenbereich (10) auf eine konfokale Blende (4), der eine Detektoreinheit (2) nachgeordnet ist, abbildet, wobei die Platte (9) im Strahlengang der Detektoreinheit (2) vorgeordnet ist, um die Abbildung des ausgewählten Probenbereiches (10) auf die Detektoreinheit (2) oder eine Abbildung der Blende (4) auf die Detektoreinheit (2) zu zentrieren.

8. Mikroskop nach Anspruch 7, wobei die Detektoreinheit einen ortsauflösenden Detektor (2) umfaßt.

9. Mikroskop nach Anspruch 7 oder 8 in Verbindung mit Anspruch 3, wobei das Mikroskop im Strahlengang wechsel- oder verstellbare Elemente (3) aufweist und die Stelleinrichtung (C) eine Konfiguration der wechsel- oder verstellbaren Elemente (3) als Betriebsparameter erfaßt.

10. Mikroskop nach Anspruch 7, 8 oder 9 in Verbindung mit Anspruch 3, wobei der Strahlengang Strahlung unterschiedlicher Wellenlänge führt und die Stelleinrichtung (C) die Wellenlänge im Strahlengang als Betriebsparameter erfaßt.

11. Mikroskop nach einem der obigen Ansprüche 7 bis 8 in Verbindung mit Anspruch 4, wobei der Regelkreis (C) die Strahlungsintensität an der Detektoreinheit (2) maximiert und/oder einen Bildversatz minimiert.

12. Mikroskop nach einem der Ansprüche 7 bis 11 in Verbindung mit Anspruch 3, wobei die konfokale Blende als Schlitzblende (4) und die Detektoreinheit als Detektorzeile (2) ausgebildet sind und wobei die Kipplage zweiachsig so eingestellt ist, daß das Bild einer Probenzeile auf der Schlitzblende (4) oder das Bild der Schlitzblende (4) auf der Detektorzeile (2) zweiachsig zentriert ist.

13. Mikroskop nach einem der Ansprüche 7 bis 12 in Verbindung mit Anspruch 2, wobei sowohl zwischen Probenbereich (10) und konfokaler Blende (4) als auch zwischen Blende (4) und Detektoreinheit (2), eine zweiachsig kipp- und/oder schwenkbare Platte (9) oder zwei unterschiedlich einachsig kipp- und/oder schwenkbare Platten vorgesehen sind.

14. Mikroskop nach einem der Ansprüche 7 bis 13 mit einem Anregungsstrahlengang zur Beleuchtung des ausgewählten Probenbereiches (10), wobei der Anregungsstrahlengang eine planparallele Platte (9) nach einem der Ansprüche 1 bis 6 aufweist.
